# EUROPEAN PATENT APPLICATION

(11) **EP 2 161 178 A2**
(43) Date of publication of application: **10.03.2010**
(21) Application number: 09011298.8
(22) Date of filing: 03.09.2009
(51) Int. Cl.: B62B 3/14

(54) **Device for hanging up personal shopping carts on supermarket carts and the like**

(30) Priority: 03.09.2008 ES 200801814 U
(71) Applicant: Germans Server, S.L., 03750 Pedreguer (Alicante) (ES)
(72) Inventor: Server Pérez, Juan, 03750 Pedreguer Alicante (ES)
(74) Representative: Gonzalez-Alberto Rodriguez, Natalia

(57) **Abstract**

Device for hanging up personal shopping carts on supermarket carts and the like, formed by a support which allows carrying the personal shopping cart belonging to the user hanging from a metal cart of those used in supermarkets or large retail outlets.

## Description

### Object of the Invention

As expressed in the title of this specification, the present relates to a device for hanging personal shopping carts in supermarket carts and the like, formed by a support constructed of a preferably polymeric material which allows carrying the personal shopping cart belonging to the user hanging from a metal cart of those used in supermarkets or large retail outlets. This enables the personal shopping cart to not be a hindrance and to be easily transported while choosing products from the shelves of the supermarket or the like. Once the purchases have been made and the acquired products have been paid for at the checkout, the user unhooks the personal shopping cart to be filled with the acquired products.

### Description of the Invention

Along general lines, the device for hanging personal shopping carts in supermarket carts and the like, object of the present invention, is formed by a U-shaped laminar support the branches or which are finished in an arched manner, configured like identical hooks for the hooking thereof to a crosspiece existing in the personal shopping cart. The web of this U-shaped form or attachment section of the branches is also arched, formed like a channel in an inverted position defining the means for hanging the assembly in one of the free edges of the front faces of the frame of the supermarket cart.

The support can also be used to store the personal shopping cart hanging from hooks or suction cups on the walls of a closet, being able to hang it both if it is a foldable personal shopping cart and if it is not.

It has been provided that the ends of the arched form of the branches have inner thickened portions to cause the clip-like fitting and to thus prevent the support from being lost, coming out of the crosspiece of the personal shopping cart in which it is located.

To facilitate the understanding of the features of the invention and as an integral part of this specification, several sheets of drawings are attached, the figures of which depict the following with an illustrative and non-limiting character:

### Brief Description of the Drawings

Figure 1 is a perspective view of a personal shopping cart, in this case a foldable personal shopping cart, which is hung from the rear face of one of the carts used in supermarkets and the like, by means of the device object of the invention.
Figure 2 is a view similar to Figure 1, with the personal shopping cart hung from the front face of the same supermarket cart.

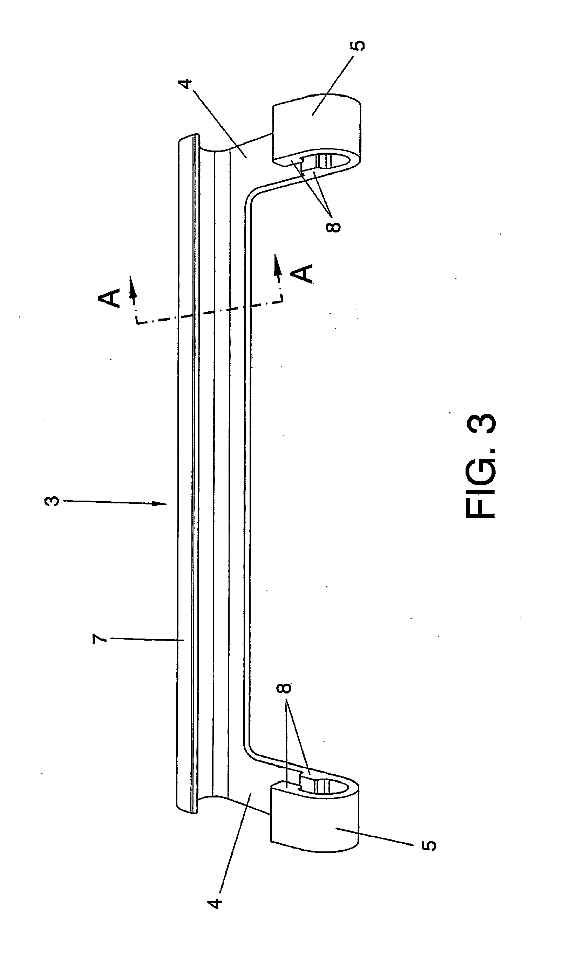

Figure 3 is a perspective view of the device object of the invention shown independently.
Figure 4 is a section through section line A-A of Figure 3.

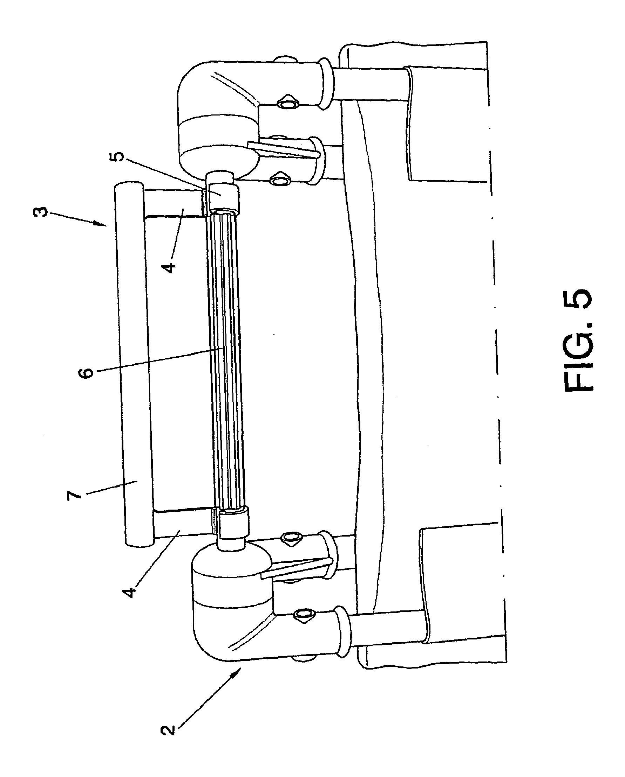

Figure 5 is a perspective view of the same device incorporated to a personal shopping cart shown partially and forming part thereof.

### Description of the Preferred Embodiment

With reference to the numbers adopted in the figures, it can be seen how the device for hanging personal shopping carts in supermarket carts and the like proposed by the invention allows the users of a supermarket or the like, where carts (1) such as the one depicted are used, to carry their personal shopping cart (2) hung from the metal cart (1) in order to move around easily, making their purchases, and to unhook it at the end to fill it with the acquired products.

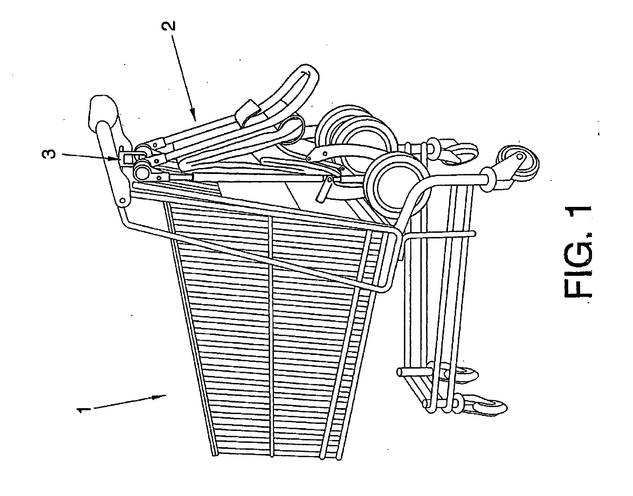

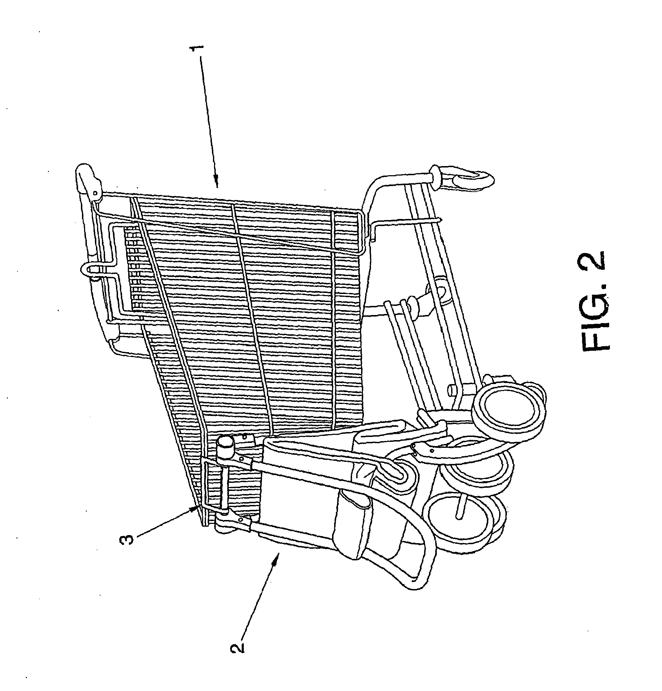

The personal shopping cart (2) can be hung from the rear face (Figure 1) or from the front face (Figure 2), having been especially designed for foldable personal shopping carts which occupy less space and are shorter, although it can also be used for non-foldable personal shopping carts.

The actual device is formed by a generally U-shaped laminar support (3) the branches (4) of which have their free ends arched to define respective identical hooks (5) for the anchoring in a crosspiece (6) of the structure of the personal shopping cart (2).

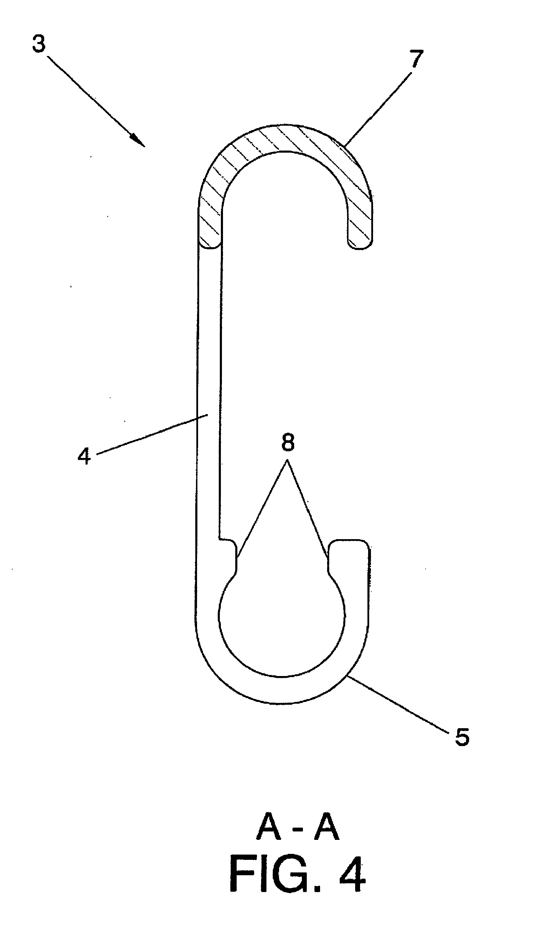

The web (7) of the U-shaped form of the support (3) is also arched like a channel (best seen in Figure 4) and allows its connection to the free edge of one of the front faces of the metal frame of the supermarket cart (1). Figure 1 shows a personal shopping cart (2) hung from the rear part of the supermarket cart, and Figure 2 it is hung from the front part thereof.

It has been provided that the support 3 can be connected (although in a detachable manner) to the crosspiece (6) of a newly constructed personal shopping cart (2) and supplied therewith in order to be used for this purpose. To prevent it from accidentally coming out, the hooks (5) have inner thickened portions (8) which slightly close the inlet opening for the snap-fitting in the crosspiece (6) of the personal shopping cart (2). This crosspiece (6) has a circular section at least in the connection area of the hooks (5), but it could also have another different section. In this case, the hooks of the support (3) will be adapted to that section.

## Claims

1. A device for hanging personal shopping carts in supermarket carts and the like, **characterized in that** it is formed by a support (3) with a U-shaped laminar structure the branches (4) of which are finished in an arched manner, formed like identical hooks (5), and the web (7) thereof is also transversely arched, defined like a channel, the arched areas (5, 7) forming the means for the anchoring to one of the crosspieces (6) of the frame of the personal shopping cart (2) and to the free edge of one of the front faces of the frame of the supermarket cart (1) or the like.

2. The device for hanging personal shopping carts in supermarket carts and the like according to claim 1, **characterized in that** the support (3) is incorporated to the frame of the personal shopping cart (2), snap-fitting in a crosspiece (6) thereof.

3. The device for hanging personal shopping carts in supermarket carts and the like according to claim 2, **characterized in that** the arched finishes like hooks (5) have two opposite inner thickened portions (8) to prevent the support (3) from accidentally coming out of the crosspiece (6) of the personal shopping cart (2) to which it is connected.
